# EUROPEAN PATENT APPLICATION

(11) **EP 3 671 061 A1**
(43) Date of publication of application: **24.06.2020**
(21) Application number: 19216730.2
(22) Date of filing: 16.12.2019
(51) Int. Cl.: F24S 10/50, F24S 80/30, F24S 80/60

(54) **SOLAR THERMAL COLLECTOR**

(30) Priority: 20.12.2018 FI 20187187
(71) Applicant: Osakeyhtiö lamit.fi, 40320 Jyväskylä (FI)
(72) Inventor: Järvinen, Ari, 40320 Jyväskylä (FI)
(74) Representative: Kinnunen, Kari Tapio

(57) **Abstract**

A solar thermal collector (100, 200), the solar thermal collector comprises an absorption surface (112a) for absorbing sun radiation, a collecting layer (110, 210) arranged adjacent to the absorption surface for collecting thermal energy received by the absorption surface, and an insulating layer (140, 240) arranged adjacent to the collecting layer for insulating the collecting layer, wherein the insulating layer (140, 240) comprises an inflatable or extrudable substance as an insulating material.

## Description

### FIELD

The invention relates to a solar thermal collector, and specifically to the structure and a manufacturing method of the solar thermal collector.

### BACKGROUND

Solar thermal collectors have existed for a long time. However, the structures of the known collectors are still complicated and thereby expensive.

There is thus a need for an improved solar thermal collector to alleviate the above disadvantage.

### BRIEF DESCRIPTION

It is an object of the invention to provide an improved solar thermal collector.

The object of the invention is achieved with the invention that is disclosed in the independent claims. Some preferred embodiments are disclosed in the dependent claims.

The solar thermal collector according to the invention has a higher yield and efficiency than known collectors and its manufacturing is substantially faster than known methods.

### DRAWINGS

The invention and the embodiments are explained in the following by reference to accompanying drawings, where
Figure 1a shows an embodiment of a solar thermal collector according to the invention;
Figure 1b shows a similar structure as in Figure 1a but applied according to an alternative embodiment;
Figure 1c shows a modification of the structure of Figure 1b;
Figure 2 shows another embodiment of a solar thermal collector according to the invention;
Figure 3 shows another embodiment of a solar thermal collector according to the invention.
Figure 4 shows another embodiment of a solar thermal collector according to the invention;
Figure 5 shows another embodiment of a solar thermal collector according to the invention;
Figure 6 shows another embodiment of a solar thermal collector according to the invention;
Figure 7 shows another embodiment of a solar thermal collector according to the invention; and
Figure 8 shows an embodiment of a method according to the invention.

### DETAILED DESCRIPTION

The embodiments relate to the structure of a thermal collector.

Generally thermal collectors are planar devices to be placed into sunlight and to collect thermal energy contained in the sun radiation. Thermal collectors typically have a glass cover, and an air space beneath the glass cover. Under the air space the thermal collector has a front face to be placed to collect sunlight. Collecting of thermal energy may be enhanced by means of a black absorption surface. Beneath the front face, there is a collecting layer, where liquid or gas is contained to collect and circulate the received thermal energy to be provided for users of the thermal energy. In cold locations, the thermal collectors are often provided with an insulation layer below the fluid space to prevent the collected heat from escaping the collector.

In the embodiments, there is provided a solar thermal collector having a collecting layer, and an insulating layer, which insulating layer comprises gas as insulating material.

The embodiments provide a plurality of advantages. One great advantage is that thermal collector can be made much thinner in space. In known thermal collectors, the insulation is carried out by wool insulation. By way of an example, such structure can have a thickness around 120 to 150 mm, whereas the embodiments of the invention allow a structure having a thickness of 30 mm to be constructed. The structure without a thick wool insulation is also much lighter. Such great difference in thickness and weight provides great savings in transportation, where even 5-time number of collectors can be transported when compared to prior solutions.

The structure according to the embodiments is also very robust against weather conditions. In prior solutions, when the wool insulation has wetted, its performance has deteriorated significantly and the structure is beyond repair. In the solution according to the invention, even if there would be a water leakage to the insulation layer, the leakage could be repaired and the insulation space could be re-filled with gas.

The gas insulation allows also the great advantage in being capable of maintaining and extending the life time of the collector. There may be provided a gas filling passage, whereby the insulation capability may be checked and returned to original state.

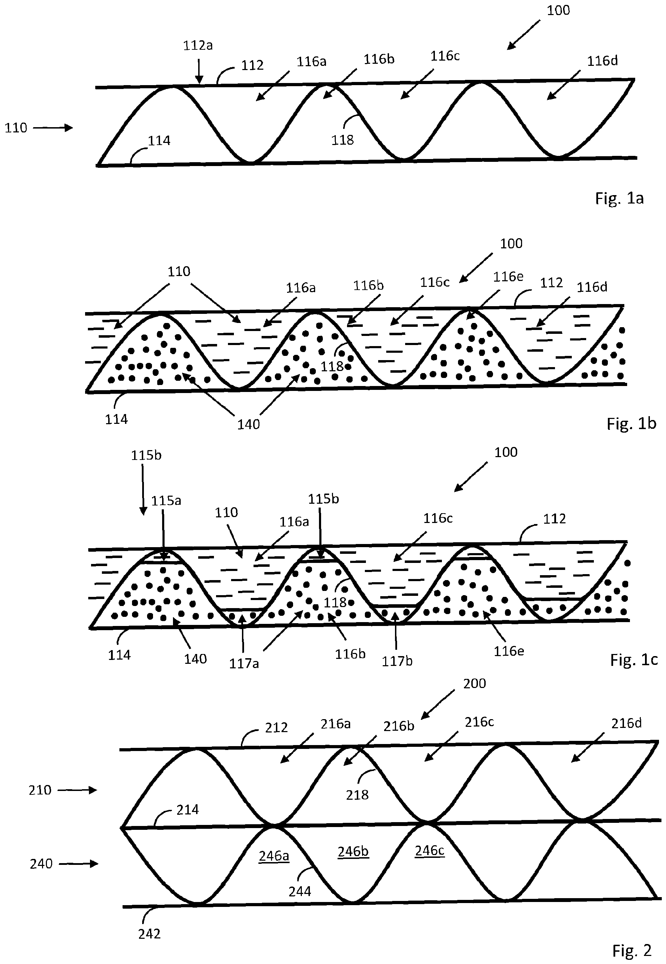

Figure 1a shows an embodiment of a cell structure of a thermal collector 100 according to the invention. There is provided a front plate or front face 112 comprising an absorption surface 112a for receiving sunlight. The front face may be made of steel, for instance, and the non-transparent absorption surface may be provided by coating on the front plate, or may alternatively be a separate sheet that is arranged on top of the front plate.

There is also provided a back/rear face/plate 114 opposite to the front face. The back face may similarly be made of the steel. Thicknesses of the front face and back face may vary between 0.01 to 0.25 mm, for instance. Between the front face 112 and back face 114 there is provided a collecting layer 110. The collecting layer may be made of plate 118 bent to a wavelike form such that channels 116a, 116b and 116c are formed alternately above and below the plate 118. The plate 118 may be fixed to the front and back faces by welding, for instance. In a practical device, on top of the front face may be arranged an air space and a glass cover.

The structure shown in Figure 1a provides the important advantage that it is a very simple structure and thereby extremely quick to manufacture in a machining process. Furthermore, the structure is, due to the several welding seams, extremely robust that it is capable of carrying great weights. As the structure is mechanically very strong, the thermal collector does not need any separate frame in contrast to the prior solutions.

The welding of the peaks (to the front face) and bottoms (to the back face) of the wave-formed plate 118 can be carried out by several welding heads simultaneously so that three wave peaks/ridges, for instance, can be welded with a single operation to the front face. The welding in Figure 1 preferably takes place from the exterior faces of the front face and the back face. That is, the welding of the plate 118 to the front face 112 takes place from the top in Figure 1 and correspondingly the welding of the plate 118 to the back face 114 takes place from below.

Figure 1a shows only an extract of the solar thermal collector. Practically there may be tens of the channels in the horizontal direction. Even though steel was mentioned as an example of the material of the front and back faces, and the wavelike middle layer, some other material suitable for bending and welding may be used.

Even though not shown in Figure 1a, the solar thermal collector may comprise other device components in addition to the cell structure shown in Figure 1a. Such components may include a reservoir arranged to the end of the cell structure such that the fluid passing through the channels 116a, 116b and 116c may be received in the reservoir/tank. Such a reservoir may subsequently comprise interfaces for connecting to other similar collectors or to pipes leading the heated fluid away from a group of collectors, or for receiving cooled fluid to be again heated in the group of collectors.

In another embodiment, the fluid circulation in the collector is closed and there a heat exchanger arranged adjacent to the collector to exchange heat therebetween.

Figure 1b shows another embodiment of the invention. As in Figure 1a, also in Figure 1b when seen from end of channels, the wavelike plate is fixed throughout its welding seam to the front plate 112 and rear plate 114.

Basically the structure of the arrangement in Figure 1b is similar as in Figure 1a but instead of having only a collecting layer as in Figure 1a, the structure of Figure 1b incorporates both a collecting layer 110 and an insulating layer 140 separated by the wavelike plate 118. In the channels 116a, 116c and 116d, there may be arranged a liquid circulation, and in the channels 116b and 116e there may be arranged an inflatable or extrudable substance.

The inflatable substance refers here to a gas, which may be argon or some other rare gas. The extrudable substance may be polyurethane, for instance. Both inflatable and extrudable substances have in common that they may be filled and/or re-filled via a small opening in the collector. Even though the following disclosure generally refers to gas as insulating material, it is understood that the insulating material may also be an extrudable substance, which would also penetrate and distribute to the whole insulating space when applied to the insulation space.

Thereby, in the structure of Figure 1b, there are two plates, a front plate 112 and a rear plate 114, and a wavelike plate 118 that is alternately fixed to the front plate 112 and rear plate 114 such that alternating liquid and gas channels are formed between the wavelike plate and the front and rear plates.

Figure 1c highlights a slight modification of the structure of Figure 1b. The modification includes a first set of recesses 115a, 115b that are formed between the wavelike plate 118 and the front plate 112, and a second set of recesses 117a, 117b that are formed between the wavelike plate 118 and the rear plate. The recesses refer here only to pressings in the wavelike plate and not through holes.

In the collecting layer 100, the recess 115b allows fluid to flow and mix between the channels 116a and 116c of the collecting layer. This provides a significant advantage that the heat is distributed evenly in the collecting layer and it can be avoided or at least alleviated that hot spots are formed in the collector.

In the insulating layer 140, the recess 117b allows the gas to flow between the channels 116b and 116e. This provides the significant advantage, that the whole insulating layer could be filled, and refilled at maintenance, from a single filling opening of the insulating layer as the gas would distribute via the recesses 117a, 117b to all channels of the insulating layer.

As explained earlier, the wavelike plate 118 is welded with a longitudinal seam to the plates 112, 114. The recesses 115a and 117a can be formed to the wavelike plate in the phase when the plate is formed to its wavelike form. The depth of the recesses in vertical direction is preferably between ¼ and ½ of the height of the wavelike plate, that is, the distance between the plates 112 and 114. The length of the recess in the longitudinal direction of the seam is preferably from 3 to 10 times the height of the wave or the distance between the plates 112 and 114. Depending on the structure of the collector, the distance between the recesses may vary between 3 to 10 centimeters, for instance.

As an alternative embodiment to the recesses being made to the wavelike plate 118, the fluid passages between the adjacent channels, such as 116a and 116c, can be made by providing recesses in the front and/or rear plates 112, 114. In such an embodiment, the wavelike plate could have a uniform surface without any depressions. Naturally, recesses may be also provided by the combination of having both pressings 115a, 115b in the wavelike plate, and also having depressions in the front/rear plates.

Figure 2 shows another embodiment of a thermal collector 200. The structures relating to the collecting layer 210 generally correspond to those already shown in Figure 1.

In addition to the collecting layer 210, Figure 2 also shows an insulating layer 240. The insulating layer has a front wall 214 and a back wall 242 and a wavelike plate 244 arranged there between. It can be noticed that the wall 214 may be a common wall for the collecting layer 210 and the insulating layer 240. In another embodiment the insulating layer 240 has an own front wall being separate from the bottom wall 214 of the collecting layer 210. In such embodiment, the collecting layer and insulating layers might be manufactured separately and be joined together afterwards.

In Figure 2, the channels 246a, 246b and 246c within the insulating layer 240 may be filled with rare gas, such as argon. There may be provided a closable opening leading to the insulating layer. The opening may be applied for leading filling gas to the insulating space whereby the insulating capability of the insulating layer may be maintained or recovered. Preferably, the insulating layer, or insulating space, has two openings that are used for the filling and/or refilling process. In the case of gas as insulating material, the first opening may be used for inserting gas and the second opening may be used for monitoring that the gas concentration exceeds a predetermined threshold value. For instance, if argon is used as filling gas, initially mostly air is being exited from the second opening. When the filling process proceeds, the concentration of argon increases, and when it exceeds e.g. 99 % of the volume of the exit gas in the second opening, it can be concluded that the filling process may be considered as complete. If urethane is used as insulating material, the criterion could be that urethane would tend to exit from the second opening.

Figure 2 shows that the wavelike plate in the insulating layer is arranged in mirror orientation to the wavelike plate of the collecting layer. This provides the significant advantage that the structure becomes very robust and could also be provided completely without the intermediate plate 214. Generally it could be stated that the collector cell structure would be so robust that it would allow a person stepping and standing on it.

Alternatively to having separate collecting layers 210 and 240 as explained above, the embodiment of Figure 2 may also be applied such that the layer 210 is similar to that of Figure 1b or 1c. That is, in environments requiring more insulation, the collecting layer might only be provided in channels 216a, 216c and so on, and the channel 216b and all other neighboring channels opening towards the rear plate 214 would form part of the insulating layer.

The recesses for enhancing flow of fluid in the collecting layer and/or recesses allowing gas mixing in the insulating layer may be applied in the structure of Figure 2 as explained in connection with Figure 1c.

In a still further embodiment, instead of having the wavelike portions as mirror images as shown in Figure 2, the structures of the collecting layer and the insulating layer could also be structurally identical. Such an embodiment would provide the advantage in that they could be manufactured by the same process.

Even though Figure 2 shows the collecting layer and insulating layer having same thickness, alternative embodiments are also possible. For instance, if more insulation would be needed, the insulation layer could have e.g. 1.5 or 2 times the thickness of the collecting layer.

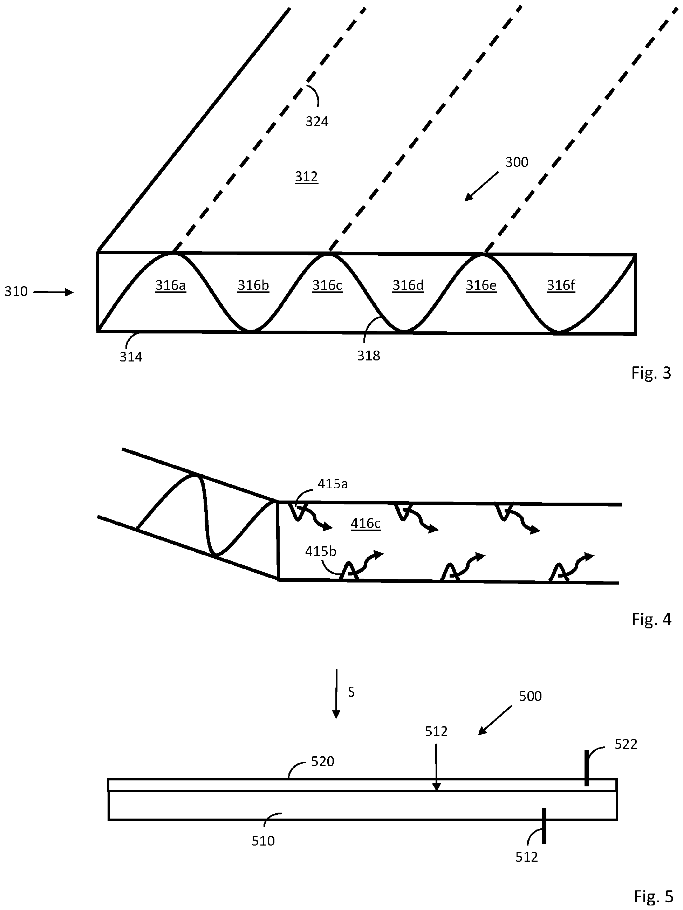

Figure 3 shows a perspective view of a collecting layer of a solar thermal collector. Here it can be seen that the channels 316a, 316b and so on extend adjacent to each other longitudinally along the length of the collector. Figure 3 also highlights the longitudinal welding seam 324 that is formed when attaching the top plate 312 and the wavelike plate 318 to each other.

Figure 4 shows another embodiment of a solar thermal collector. In this embodiment, there are formed recesses/openings in the intermediate wavelike plate such that the fluid may be flow between the adjacent channels. This has the great advantage in that the heat is distributed evenly in the collecting layer. While used, one part of the collecting unit might be in direct sunlight whereas another part of the collecting unit might be in shade. By providing openings in the walls of the channels, heat is distributed evenly and thereby the performance of the collector can be significantly improved.

In a preferred embodiment, the recesses 415 are formed to the wavelike plate during the same process when it is being bent. The recesses are preferably made to the wavelike plate to its ridges and/or bottoms such that the recesses are formed to the area of the welding seams, such as the seam 324 in Figure 3. Thereby, when there is a recess in the ridge of the wavelike plate that portion of the wavelike plate will not be attached to the front plate 312, and the fluid can flow between the two channels that are on both sides of the welding seam.

Figure 4 shows the solar thermal collector from two sides. On the left there is shown the collecting unit from the end face similarly as in Figure 3, for instance. On the right, there is section view of one channel 416c. It can be seen that in this exemplary embodiment, there are provided openings/recesses 415a in the top part of the channel and openings 415b in the bottom part of the channel. Referring to Figure 3, we could assume that Figure 4 illustrates channel 316c, whereby the top openings 415a provide a flow connection to channel 316b and the bottom openings 415b a flow connection to channel 316d.

The embodiments are naturally not limited to the form and number of the openings. The number of recesses/openings may be anything from one upwards. The form of the recesses/openings may be round, oval or rectangular just to mention some examples. The size or length of the recesses/openings is not limited but the can be short/small, or they may extend even almost the length of the channel.

There may be different arrangement also regarding the placement of the recesses/openings in the channels. However, in one preferable embodiment, the openings connecting a channel to adjacent channels are arranged vertically on different levels, whereby there is also a vertical component in the fluid movement from one channel to another. In this way the channel fluid is maximally mixed and involved in fluid transfer between the channels.

Even though Figure 4 shows the openings as through holes in the wavelike plates, in another embodiment the elements are not through holes but only protrusions in the wall thereby causing increased turbulence within each channel. The increased turbulence also improves conveyance of thermal energy between the channels and thereby enhances the yield and efficiency of the whole collector.

Figure 5 shows another advantageous embodiment of the invention. In this embodiment, there is provided a solar thermal collector 510 as shown in the previous exemplary Figures. On top of the front plate 512 of the solar thermal collector there is formed a printed or sprayed solar cell 520. The thickness of the solar cell may be between 200 to 1000 nanometers, for instance.

The arrangement of Figure 5 provides the advantage that energy can be collected in two ways. On the other hand the thermal energy of the sun radiation can be collected with the thermal collector, and also the solar panel/cell technology can be taken advantage of with the solar panel.

Typical disadvantage associated with the solar cells is that the efficiency of the cell declines rapidly when the temperature of the cell increases. By way of the embodiment of Figure 5 the efficiency can be significantly improved as the thermal collector can be applied to reduce the surface temperature of the solar cell. It is noted that the recesses presented in Figure 4 in combination with the embodiment of the Figure 5 further improve heat distribution in the thermal collector and thereby improve the performance of the solar cell.

By way of applying the solar thermal collector for cooling the solar panel, the efficiency of the latter could be increased from a common 15 % level by 2 to 5 %. For the cooling purpose, the water/liquid temperature would preferably be below the outside temperature, but could also be as low as few degrees Celsius. In addition to improving the efficiency of the solar panel by cooling, such cooling would also improve the durability of the components of solar panel as it is operated in lower temperatures.

Figure 5 also shows connecting members 512 and 522 for transferring energy away from the system for further utilization. The connecting member 512 is formed to the thermal collector and can be heat exchanger, for instance. The connecting member 522 illustrates connecting members to transfer electric energy to be consumed directly in a household or other consuming facility, stored in batteries for later use, or to be transferred to power grid.

In a preferred embodiment, the solar cell 520 is a perovskite solar cell. Perovskite may refer to calcium titanium oxide CaTiO₃, but more generally substances where the crystal structure is dodecahedron being thus similar to perovskite. The molecular formula of perovskites is of format ABX3, where A is metal ion and X usually oxygen or fluoride ion. Other examples of perovskite are thus NaFeF₃ and CH₃NH₃PbCl₃.

Perovskite is here mentioned as an example of the material of the printable/sprayable layer of the solar cell and the advantages of the invention may be achieved with some other corresponding material.

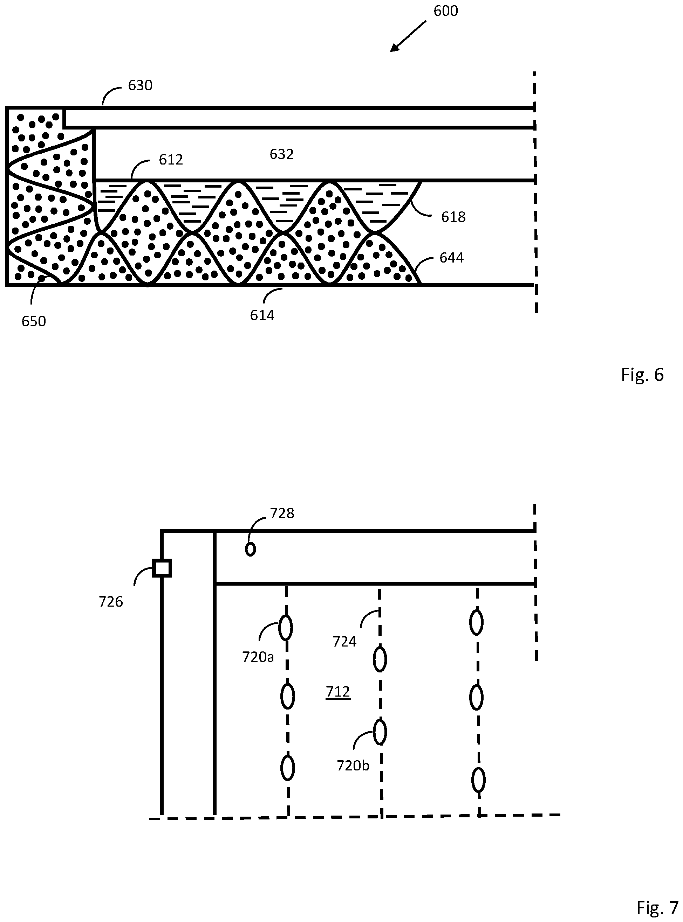

Figure 6 shows another embodiment of a solar thermal collector 600. In this embodiment there are shown optional glass cover 630, and an air space 632. Beneath the air space 632 there is provided the collecting layer that is formed between the front plate 612 of the collecting layer and the wavelike plate 618. In the collecting layer there are plurality of channels housing fluid, which is highlighted by horizontal lines. As in previous figures, the wavelike plate is welded to the front plate.

Adjacent to the collecting layer, there is formed an insulating layer. The insulating layer contains gas, which is highlighted by the dots under the wavelike plate 618.

In the embodiment of Figure 6, the insulating layer is formed by the first wavelike plate 618, and a second wavelike plate 644, which are arranged in mirror orientation to each other. Thereby, the bottoms of the plate 618 and the ridges of the plate 644 meet and they can be welded together during manufacturing. Below the insulating layer, is the bottom plate 614 of the thermal collector, and the channels between the plate 644 and the bottom plate 614 can be filled with the same gas.

As explained in connection with Figure 1c, also this embodiment may be provided with recesses to allow flowing and mixing of fluid between the channels of the collecting layer. Also the channels of the insulating layer may be provided with recesses between the plate 644 and the rear plate 614. To allow gas access to the spaces between the plates 618 and 644, the plate 644 may have through holes. The same applies to the end/side insulations such that there may be recesses and holes such as to allow gas access to all desired places. Preferably, there is only one gas filling aperture in the collector, via which all insulation spaces could be filled. A second opening may be provided to check that the filling of the insulation material to the insulation space fulfils a predetermined quality criterion.

The structure of Figure 6 is very advantageous as it can be made very thin. This comes due to the fact that there is no need for an intermediate plate between the collecting layer and the insulating layer but the two layers are separated by the plate 618.

Figure 6 highlights also that the thermal collector may also be insulated from the sides/ends. In the embodiment of Figure 6 this may be done by applying a third wavelike plate 650, which is arranged in perpendicular orientation to the other wavelike plates. As shown, the wavelike plate 650 may be attached by welding to the vertical end plate of the collector and to other wavelike plates 618 and 644.

Figure 7 highlights further the mixing members that are configured to mix the fluid between the channels of the thermal collector. There are shown welding seams and recesses 720a, 720b in connection with the welding seams. That is, the below wavelike plate is welded to the wall 712 by welding seams 724 but the wavelike plate does not touch the wall 712 in the area of the recess 720b. Thereby the fluid can flow between the channels on both sides of the seam 724.

Figure 7 also highlights a gas filling aperture 726 for filling gas to the insulating layer. Figure 7 also shows a fluid connector 728. Via the fluid connector, fluid can be added to the collecting layer. The fluid connector may also be used for connecting the thermal collector panel to other identical panels.

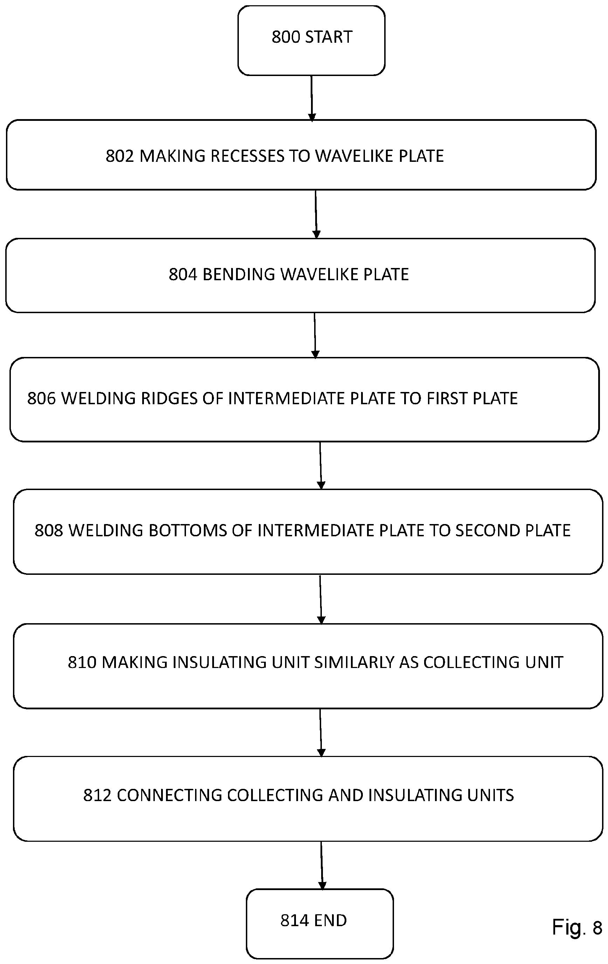

Figure 8 shows an embodiment of the manufacturing method, especially relating to the structure of Figure 2.

In the initial step 802, mixing means for mixing the fluid between the channels are made to the wavelike plate of the collecting layer/unit. The mixing means are preferably made as recesses but may be also be in the form of cutouts/holes where a portion of the wall is cut out. Alternatively a slit may be made to the plate and a portion of the wall next to the slit is bent such that a passage is formed for the fluid or gas to flow from one channel to an adjacent channel. Any suitable machining tool, such as a spike or chisel, for instance, may be applied for making the slits.

In 804, the intermediate plate is bent into a wavelike form having alternating ridges and bottoms. The bending may be carried out pressing the intermediate plate between two formed moulds, for instance.

Even though steps 802 and 804 have been presented as separate steps, they may be carried out as one step too. That is, the moulds receiving the plate there between may have protrusions and receptacles, respectively such that recesses are being formed during the bending/pressing process.

When the bending and forming of recesses have been carried out, the wavelike plate is welded 806 to a front plate of the thermal collector. In practise, the welding may be carried out by applying several welding heads at the same time such that several, e.g. three ridges of the wavelike intermediate plate are welded to the front plate in one working phase of the welding tool. The welding is preferably carried out from the direction of the front plate.

In 808, when the plate has been welded to the front plate, the bottoms of the intermediate plate are similarly welded to the rear plate. In one embodiment, the above steps provide a structure according to Figure 1c, which includes the collecting layer and insulating layer on two sides of the wavelike plate. Alternatively, the above steps provide a structure according to Figure 1a modified with having recesses at the welding seams.

The following steps illustrate some further embodiments, where the collecting layer and insulating layer are provided as separate entities.

Step 810 illustrates the manufacturing of the insulating layer. As explained above in connection with the collecting layer, the insulating layer may contain passages to allow insulation material to flow between channels but such passages are optional as is the case also in the case of the collecting layer.

When the collecting layer and the insulating layer are ready, the rear plate of the collecting layer and the front plate of the insulating layer are connected to each other by welding, for instance.

In alternative embodiments of the method, the insulating layer is formed as shown in Figure 6 with or without the end insulation layer. First the two anti-phase wavelike plates may be welded together and the structure may be fixed to plates residing on both sides. All these welds may be carried out by a plurality of welding heads next to each other whereby the manufacturing process becomes very fast.

The embodiments show a solar thermal collector having a collecting layer and an insulating layer being a gas filled layer.

In the previous embodiments, reference has been made to wavelike form in several instances, such as the wavelike plate of the collecting layer, and the wavelike plate(s) of the insulating layer. It is to be understood that the concept wavelike may refer here to several different forms, such as the waves having a form being at least substantially sinus-form (curved), half-circle, triangular or rectangular. The embodiments shown are equally applicable to structure having other wavelike forms than substantially sinus-form. In the one exemplary form of the plate having a form of half circles opening towards the rear plate, the collecting layer would be limited to the spaces between the half circles. The share of the insulating layer would thereby be between 60 to 80 percent of the total volume of the collector. Such solution would be specifically applicable in cold environments where more insulation is needed.

In an embodiment, there is provided a solar thermal collector, comprising a collecting layer for collecting thermal energy of the sun, the collecting layer comprising a first wall to be arranged towards the sun, a second wall arranged at a distance from the first wall, and fluid circulating channels arranged between the front wall and the back wall, and the fluid circulating channels are formed by fixing a waveform plate with several seams to the first wall and the second wall. The waveform plate comprises ridges and bottoms, and the ridges are welded to the first wall and the bottoms are welded to the second wall. The ridges and bottoms of the waveform plate are welded to the respective walls from the outside of the collecting layer. The solar thermal collector comprises an insulating layer arranged on the backside of the solar thermal collector when seen from the sun radiation direction.

In an embodiment, the insulating layer comprises a front face/plate/wall being the wall facing the collecting layer, and a back wall arranged at a distance from the front wall.

In an embodiment, the back wall of the collecting layer is the same wall as the front wall of the insulating layer.

In an embodiment, the insulating layer comprises a channel structure formed by a waveform plate attached to the first wall and the second wall of the insulating layer.

In an embodiment, the collecting layer and insulating layer are structurally similar by having similar structural components.

In an embodiment, the collecting layer and insulating layer are structurally similar.

In an embodiment, there is provide a method of manufacturing a solar thermal collector, comprising forming a collecting layer by, placing a waveform plate and a substantially planar first wall next to each other, fixing the waveform plate to the first wall by laser welding to the ridges of the waveform plate from the side of the first wall being opposite to the side facing the waveform plate, placing a second wall on the other side of the waveform plate when compared to the first wall, and fixing the waveform plate to the first wall by laser welding to the bottoms of the waveform plate from the side of the second wall being opposite to the side facing the waveform plate.

In an embodiment, there is provided a method of manufacturing a solar thermal collector, comprising forming an insulating layer similarly as the collecting layer, a first wall of the insulating layer being the same wall as the second wall of the collecting layer.

In an embodiment, the waveform plate comprises a wavelike cross-section, which wavelike cross-section comprises is one of at least substantially sinus-form, triangular or rectangular.

In an embodiment, the solar thermal collector comprises an absorption layer/surface on top of the collecting layer, an air layer on top of the collecting layer, which air layer is covered by a glass cover.

In an embodiment, the solar thermal collector comprises fluid reservoirs at the ends of the cell structure, which reservoir is in fluid flowing connection to the channels of the collecting layer. The reservoir comprises further connecting members for connecting the solar thermal panel to other similar panels or to external arrangements that take use of the heated fluid or that provide cooled fluid to the panel to be heated.

In an embodiment, the solar thermal collector comprises a gas filling passage leading to the insulating layer for filling and/or refilling the insulating layer with gas.

In an embodiment, the gas is argon or some other rare gas.

In an embodiment, there are fluid passages between the wavelike plate and front and/or rear plate. The fluid passages may be formed as recesses/depressions in the wavelike plate. The depressions may have a height between ¼ to ½ of the height of the wave of the wavelike plate and/or the recesses have a length that is between 3 to 10 times the height of the wave of the wavelike plate.

In a vertical orientation of the solar thermal collector, the collecting layer is above the insulating layer. In an embodiment, the solar thermal collector comprises an insulating layer also on one or more sides of the collecting layer, that is, horizontally on the same level as the collecting layer. In an embodiment, the side insulating layer comprises a third waveform plate fixed between two walls such that gas is applied on both sides of the third waveform plate.

Above have been presented some embodiments of the invention. It is noted that the features of the embodiments are not bound to be applied only in the embodiment in which they have been illustrated, but features of different embodiments may be combined in various ways.

The invention is not limited to the exemplary embodiments shown in the drawings and discussed in the above specification but may vary within the scope of the accompanying claims.

## Claims

1. A solar thermal collector (100, 200), the solar thermal collector comprises an absorption surface (112a) for absorbing sun radiation, a collecting layer (110, 210) arranged adjacent to the absorption surface for collecting thermal energy received by the absorption surface, and an insulating layer (140, 240) arranged adjacent to the collecting layer for insulating the collecting layer, wherein the insulating layer (140, 240) comprises an inflatable or extrudable substance as an insulating material, and the collecting layer and/or the insulating layer are formed by a waveform plate attached to a front plate and/or a bottom plate such that channels are formed between the waveform plate and the front plate and/or the bottom plate, **characterized in that** the solar thermal collector comprises passages in the collecting layer and/or the insulating layer for allowing fluid and/or the insulating material to flow between channels of the layer, which waveform plate (118) is fixed to the front plate (112) and/or the bottom plate (114) by welding from ridges and/or bottoms of the waveform plate, wherein the waveform plate comprises one or more recesses (115a, 115b, 117a, 117b) in the ridges and/or the bottoms such that fluid or insulating material passages are formed between the waveform plate and the front and/or the bottom plate.

2. A solar thermal collector according to claim 1, **characterized in that** the collecting layer (110) comprises a front plate (112) to be arranged towards the sun when in use, the collecting layer (110) further comprising a waveform plate (118) which is fixed to the front plate (112) at predetermined intervals such that fluid channels (116a, 116c) are formed between the fixing areas of the waveform plate and the front plate.

3. A solar thermal collector according to claim 1, **characterized in that** the collecting layer (110) is formed by a waveform plate (118) arranged between a front plate (112) and a bottom plate (114) whereby fluid channels (116a, 116b) are formed on both sides of the waveform plate.

4. A solar thermal collector according to any preceding claim, **characterized in that** the insulating layer (240) is formed by a second waveform plate (244) arranged between two walls whereby gas channels (246a, 246b) are formed on both sides of the second waveform plate.

5. A solar thermal collector according to any preceding claim, **characterized in that** the insulating layer comprises a first waveform plate (618) and a second waveform plate (644) which are arranged in mirror orientation with respect to each other such that the bottoms of the waveform plate are welded to the ridges of the second waveform plate, the insulating layer further comprising a bottom plate (614), and the bottoms of the second waveform plate (644) are welded to the bottom plate (614).

6. A solar thermal collector according to any preceding claim, **characterized in that** the collecting layer is arranged on a first side of the waveform plate (618) and the insulating layer is arranged on a second side of the waveform plate.

7. A solar thermal collector according to any preceding claim, **characterized in that** the solar thermal collector comprises a printable solar panel (520) for providing electric energy, the solar pane being arranged on the collecting layer on the side to be arranged towards the sun.

8. A solar thermal collector according to any preceding claim, **characterized in that** the insulating layer comprises an opening via which the insulating material may be filled and/or refilled to the whole insulating layer.

9. A solar thermal collector according to any preceding claim, **characterized in that** the wavelike plate is welded to the front and/or the bottom plate with longitudinal parallel welding seams.

10. A solar thermal collector according to any preceding claim, **characterized in that** the depth of the recesses are between ¼ and ½ of the distance between the front plate and the rear plate.

11. A solar thermal collector according to any preceding claim, **characterized in that** the length of the recess in a longitudinal direction of a welding seam is between 3 to 10 times of the distance between the front plate and the rear plate.

12. A solar thermal collector according to any preceding claim, **characterized in that** the distance between two recesses is between 3 10 centimeters.

13. A method of manufacturing a solar thermal collector, **characterized in that** the method comprises:
forming recesses to an intermediate plate or to a front plate or a bottom plate;
bending the intermediate plate to a wavelike form, wherein if the recesses are formed to the intermediate plate, the steps of forming the recesses and bending can take place in one phase or in separate phases;
welding (806) the wavelike plate from its ridges and/or its bottoms by means of parallel longitudinal welding seams to a front plate and/or to a rear plate of the solar thermal collector such that fluid or insulating material channels are formed between the wavelike plate and the front and/or rear plate, wherein the recesses in the wavelike plate or the front plate or the bottom plate form passages in the collecting layer and/or the insulating layer for allowing fluid and/or the insulating material to flow between channels of the respective layer.

14. A method of manufacturing a solar thermal collector according to claim 13, **characterized in that** the method comprises:
forming recesses to the intermediate plate;
bending the plate to a wavelike form, which steps of forming the recesses and bending can take place in one phase or in separate phases;
welding (806) the wavelike plate from its ridges and/or its bottoms by means of parallel longitudinal welding seams to a front plate and/or to a rear plate of the solar thermal collector such that fluid or insulating material channels are formed between the wavelike plate and the front and/or rear plate, wherein the recesses in the wavelike plate form passages in the collecting layer and/or the insulating layer for allowing fluid and/or the insulating material to flow between channels of the layer.

15. A method according to claim 13 or claim 14, **characterized in that** the method comprises:
forming a closable opening to the insulating layer;
filling and/or refilling the whole insulation layer with insulation material through the opening.
